# EUROPEAN PATENT APPLICATION

(11) **EP 0 661 870 A1**
(43) Date of publication of application: **05.07.1995**
(21) Application number: 95300007.2
(22) Date of filing: 03.01.1995
(51) Int. Cl.: H04N 1/50

(54) **Method and apparatus for liquid ink recording of images with black ink and color inks**

(30) Priority: 03.01.1994 US 176381
(71) Applicant: XEROX CORPORATION, Rochester New York 14644 (US)
(72) Inventor: Dudek, Lesley P., Webster NY 14580-0616 (US); Dewar, Vaughan L., Rochester NY 14626 (US)
(74) Representative: Reynolds, Julian David

(57) **Abstract**

An apparatus (10) and method for liquid ink recording of color images (Figs. 3-5) uses a black ink with color inks and a heated platen (30) to reduce intercolor bleed and produce uniform solids with sharply defined edges. Each scan line of an image is deposited on a print medium in a plurality of passes by a color printhead (26) and a black printhead (27) on a carriage (12). Each separate pass of the printheads (26,27) deposits a fraction of a total number of black ink spots in a partial tone pattern and all of the ink spots of one of the colors, such as cyan, magenta or yellow.

## Description

The present invention relates to a liquid ink recording method and apparatus of recording color images using a black ink with color inks that reduces intercolor bleed and exhibits uniform solids and sharply defined edges. More specifically, the invention relates to a method and apparatus for printing black and color images by depositing all of the ink spots of one of a plurality of different colors and simultaneously depositing fractions of the total number of ink spots on each pass of at least one printhead across a print medium.

Liquid ink printing may take a number of forms. In ink jet printing, exemplified by US-A-4,544,931 (Watanabe et al), a liquid droplet is ejected from a single scanning nozzle and in US-A-4,593,295 (Matsufuji et al) liquid droplets are ejected from multi-nozzle, multi-color heads arranged for scanning; in electroosmotic ink recording, exemplified by US-A-4,383,265 (Kohashi) ink droplets are made to fly from the tip of a needle shaped recording electrode; similarly, in electrostatic ink ejection, exemplified by US-A-4,166,277 (Cielo et al), ink is retained in holes of an ink reservoir and is attracted out of the holes by the selective application of a voltage between the ink and selected electrodes; and in acoustic ink printing, exemplified by US-A-4,308,547 (Lovelady et al), a liquid drop emitter focusses acoustic energy to eject a liquid ink. The present invention for depositing ink droplets has equal applicability to each of these types of recording devices. The preferred embodiment uses a thermal ink jet printing device.

In typical thermal ink jet printing, one or more printheads, containing multiple drop generating orifices, are swept across a media to be printed. Appropriate drops of black or color ink are discharged in a grid pattern as the printheads move across the print medium. The print medium is then advanced and a next pass of ink drops are ejected as the printheads are again swept across the print medium. Through a number of repetitions, a full page image is constructed. This results in acceptable image reproduction in most cases, especially if inks of substantially similar dry-time are utilized.

However, for plain paper printing, the best reproduction of black images occurs using slow-drying black ink compositions. On the contrary, due to intercolor bleed encountered with multiple ink printing, full color reproduction is best performed using fast-drying color inks.

When a combination of color and black reproduction is necessary, such as when using cyan, yellow, magenta and black ink printing, conventional printers use either slow-dry black ink, which causes varying degrees of color/black interbleed with the cyan, magenta and yellow inks, or use a fast-drying black ink that reduces intercolor bleeding but also reduces reproduction clarity, particularly in black line edge sharpness.

The present invention further provides a colour printer for depositing black liquid ink spots and liquid ink spots having a plurality of different colors on a print medium, the printer comprising:
a liquid ink spot producing means for depositing the liquid ink spots on said medium,
traversing means for causing said liquid ink spot producing means to move in a traversal direction across said print medium in a plurality of passes for an area to be printed; and
depositing means for depositing fractions of a total number of said black ink spots and all of the ink spots of one of the plurality of different colors on separate ones of said passes.

Preferably, the total number of the passes for the area to be printed is 3 and approximately 1/3 of the total number of black ink spots are deposited in a thirdtone pattern on said medium on each of said passes.

Preferably, the total number of the passes is 3 and on the first pass approximately 1/2 of the total number of black inks spots are deposited on said medium in a halftone pattern and each of the second and third passes approximately 1/4 of the black ink spots are deposited on said medium in a quartertone pattern.

Preferably, the black ink spots are produced from slow-dry black ink and said color ink spots are produced from fast-dry color ink, the slow-dry black ink drying at a relatively slower rate than the fast-dry color inks.

Preferably, at least one printhead comprises at least one thermal ink jet printhead.

Preferably, the printer further comprises a controller; and said liquid spot means is connected to said controller for depositing the ink spots on said medium on a command from said controller.

The invention further provides a method of colour liquid ink printing by depositing black liquid spots and liquid ink spots having a plurality of different colors on a print medium, said method comprising the steps of:
directing signals from a controller to a liquid ink spot producing means;
causing the liquid ink spot producing means to traverse across said print medium for a plurality of passes for an area to be printed in accordance with said signals;
selectively energizing the liquid ink spot producing means in accordance with said signals to deposit fractions of a total number of said black ink spots and all of the ink spots of one of the plurality of different colors on separate ones of said passes.

The method preferably further comprises the step of heating said print medium to facilitate drying of the ink spots deposited on said medium. Preferably, the medium is heated to 100°C.

Preferably, the black ink spots are deposited in a partialtone pattern on each of said passes.

Preferably, the total number of passes for the area to be printed is 3 and approximately 1/3 of the total number of black ink spots are deposited in a thirdtone pattern on said medium on each of said passes. Alternatively, the total number of the passes is 3 and on the first pass approximately 1/2 of the total number of black inks spots are deposited on said medium in a halftone pattern and on each of the second and third passes approximately 1/4 of the black ink spots are deposited on said medium in a quartertone pattern.

The invention further provides a method of color thermal ink-jet printing, said method comprising the steps of:
heating a print medium;
causing at least one printhead to traverse in a traversal direction across the print medium for a plurality of passes for an area to be printed; and
depositing a fraction of a total number of black ink spots in a partialtone pattern and all of a total number of ink spots of one of a plurality of different colors from the at least one printhead onto the print medium on separate ones of said passes.

Preferably, the medium is heated at up to 150°C.

Preferably, the total number of passes for the area to be printed is 3 and approximately 1/3 of the total number of black ink spots are deposited in a thirdtone pattern on said medium on each of said passes. Alternatively, the total number of passes is 3 and on the first pass approximately 1/2 of the total number of black inks spots are deposited on said medium in a halftone pattern and each of the second and third passes approximately 1/4 of the black ink spots are deposited on said medium in a quartertone pattern.

The method preferably further comprises the step of offsetting the color printhead from the black printhead in a direction perpendicular to the traversal direction.

This invention provides a simple method and apparatus for improving overall print appearance of a color image produced by a liquid ink recording device.

This invention also provides a method and apparatus for printing color images using a slow-dry black ink with fast-dry color inks while reducing intercolor bleed and exhibiting uniform solids and sharply defined edges.

This invention provides these and other features in a liquid ink recorder that prints multiple color images onto a print medium. All of the ink spots of one of a plurality of differently colored inks (typically cyan, magenta and yellow) are deposited on the print medium on separate passes of at least one printhead while simultaneously depositing fractions of a total number of black ink spots on each pass.

A more complete understanding of the present invention can be obtained by considering the following detailed description in conjunction with the accompanying drawings, wherein like index numerals indicate like parts.

The invention will be described in detail with reference to the following drawings, wherein:
Figure 1 is a perspective view schematically illustrating a multi-color, multi-head, scanning-type ink jet printer;
Figure 2 is a view taken in a direction of line 2-2 of Figure 1 illustrating the color printhead and black printhead;
Figure 3 illustrates a line scan of inks deposited by successive passes of the color printhead and black printhead;
Figure 4 is an alternate configuration of the color printhead and black printhead showing an offset between the two printheads;
Figure 5 illustrates a line scan of inks deposited by sequential passes of the color printhead and black printhead of Figure 4.

This invention provides an apparatus and a printing process that generates high-quality color and black ink images. During the process, paper or another suitable medium, such as labels or coated transparencies, are held during printing on a heated platen. The printing process involves printing fractions of a total number of black inks spots and all of the ink spots of one of a plurality of different colors on separate passes of at least one printhead across the print medium for an area to be printed.

The black ink spots may be printed in a partialtone pattern (such as semitone, thirdtone or quartertone). Each partial tone contains complementary pixels of the total black separation of an image.

After three or four passes of at least one printhead, depending on the printhead configuration used, all of the required ink spots of each color and black for a given area are deposited on the print medium. In a preferred embodiment, a black ink printhead and a color-ink printhead are used in a side-by-side or offset configuration. The color inks (typically cyan, magenta and yellow) are printed using three consecutive sections of the color printhead.

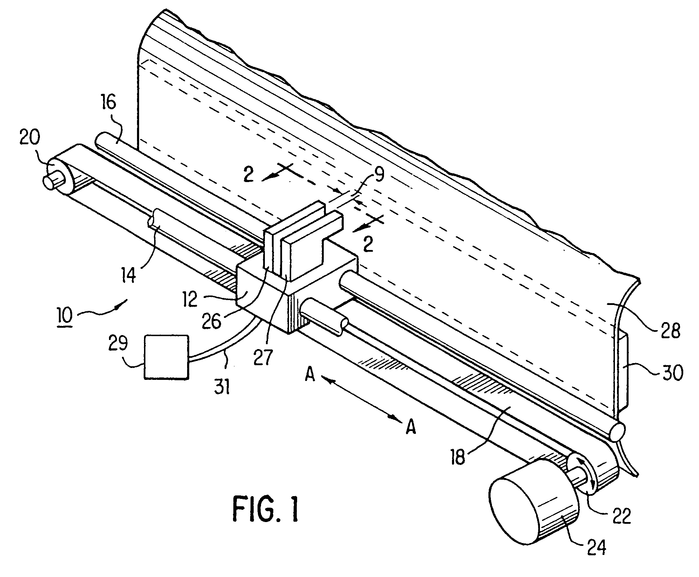

Turning now to Fig. 1, there is shown a multicolor, multi-head printing mechanism 10 including a carriage 12 mounted for movement (in the directions of arrow A-A) upon guide rails 14 and 16 secured to a frame (not shown) of the printer. The carriage is driven rightwardly and leftwardly upon the guide rails 14 by any suitable mechanism, such as a drive belt 18 supported between idler pulley 20 and drive pulley 22, and driven by motor 24. In order to make full-color recordings, color printhead 26 (for delivering yellow, cyan and magenta inks) and black printhead 27 (for delivering black ink) may be mounted in the carriage 12. Selected ink drivers (not shown) contained within printheads 26 and 27 may be activated in response to a drive signal from controller 29, connected to carriage 12 by cable 31, to expel ink onto recording medium 28 supported upon platen 30. The controller may be mounted in various locations on printing mechanism 10. Although the medium may be any suitable material, such as labels or transparencies, this invention has particular advantages for use with plain paper. The printing may take place at ambient temperature or, using a suitable means of heating the print media, at an elevated media temperature.

In a preferred embodiment, platen 30 is heated to heat print medium 28. The print medium 30 may be heated at up to 150°C. Excellent results are obtained when the print medium is heated to 100°.

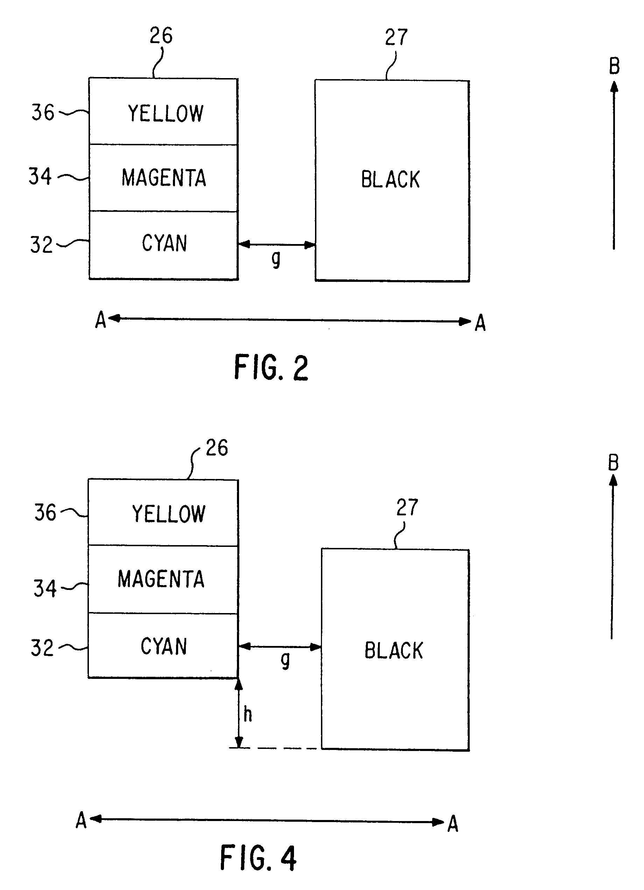

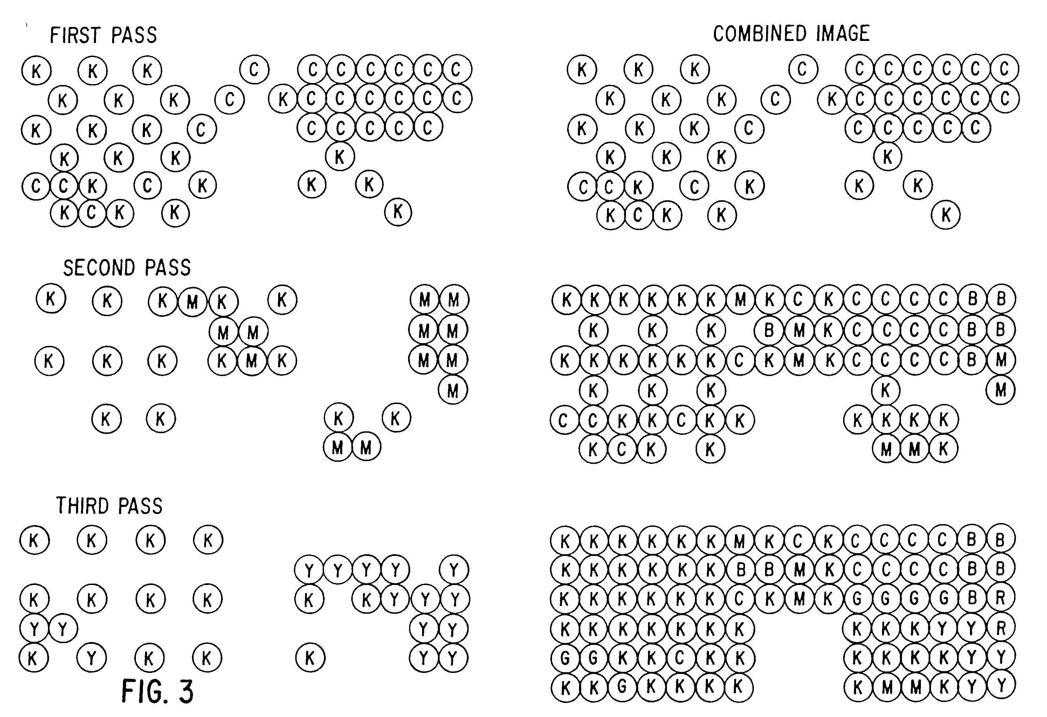

An example of a three-pass system is shown in Fig. 2. In this configuration, color printhead 26 and black printhead 27 have a slight offset g, as shown in Figures 1 and 2. Color printhead 26 has three stacked sections: cyan printhead section 32, magenta printhead section 34 and yellow printhead section 36. Arranging printhead sections 32, 34 and 36 in this manner allows for bidirectional printing (printing with printheads 26 and 27 moving in both directions) with the colors cyan, magenta and yellow deposited in the same order when printing in either direction. This prevents variations in color mixing, known as color banding, that occurs when subtractive color mixing is used with color deposited in the opposite order, yielding slightly different colors. As in Fig. 1, arrow A-A in Fig. 2 indicates the direction of movement of cartridge 12 and thus of printheads 26 and 27. Arrow B indicates the direction of movement of print medium 28.

In operation, the printheads 26 and 27 move horizontally and the print medium moves in the vertical direction. However, these directions could be altered to operate in any other suitable directions. In this configuration of a preferred embodiment, a total of 3 printing passes of printheads 26 and 27 across print medium 28 occur.

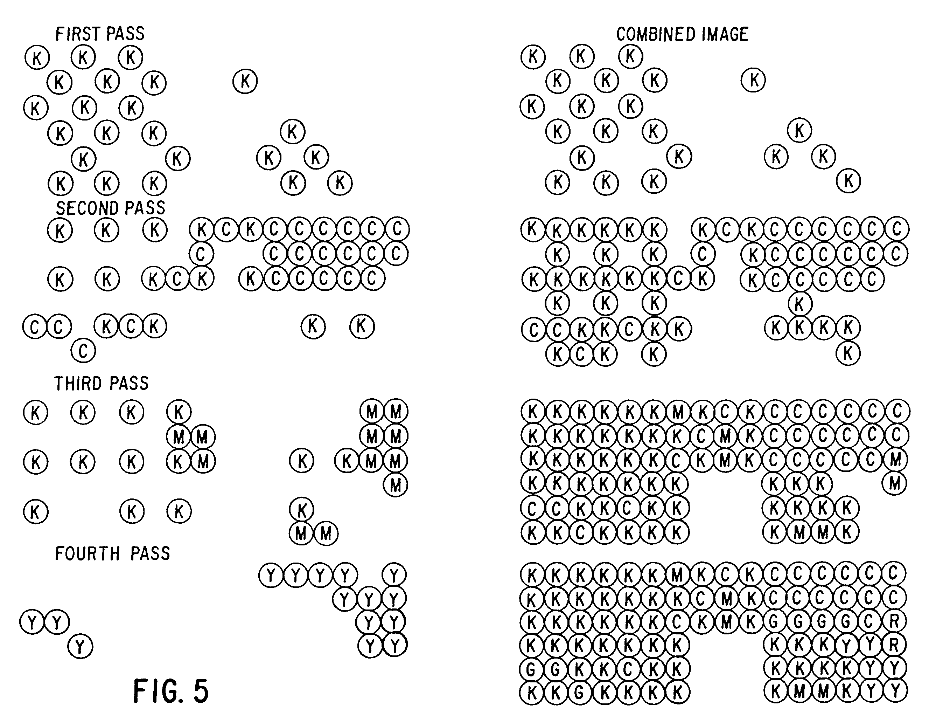

As shown in Figure 3, the pixels are deposited by the configuration shown in Fig. 2 as follows: On the first pass: approximately 1/2 of the black pixels are printed in a halftone pattern along with all the cyan pixels. On the second pass: approximately 1/4 of the black pixels are printed in a quartertone pattern along with all of the magenta pixels. On the third pass: the final 1/4 of the black pixels are printed in a quartertone pattern along with all of the yellow pixels. After each pass the print medium 28 is advanced by 1/3 of the printhead width so that the next section of printhead 26 is properly aligned with the current printing line. The lettered circles shown in Figs. 3 and 5 represent ink spots with the K representing black, the C representing cyan, the M representing magenta, the Y representing yellow, the B representing blue (C + M), the R representing red (M + Y), and the G representing green (C + Y).

After the third pass in this configuration, all the ink spots of a current scan line are deposited on print medium 28. In this embodiment, the printheads 26 and 27 are aligned side-by-side with an offset g.

In Figure 4, a four pass configuration is shown. In this configuration of a preferred embodiment, the printheads 26 and 27 are also offset in a direction perpendicular to the direction of movement of printheads 26 and 27 by an offset h, which has a distance equal to 1/3 the width of color printhead (and equal to the entire width of any single color segment within the color printhead) 26, as shown in Fig. 4.

The configuration shown in Fig. 4 deposits ink on print medium 28 as shown in Fig. 5. In this configuration, four printing passes of printheads 26 and 27 across print medium 28 occur for any given printed area. The operation of this configuration is as follows: On the first pass: approximately 1/2 of the black pixels are printed in a halftone pattern. On the second pass: approximately 1/4 of the black pixels are printed in a quartertone pattern along with all of the cyan pixels. On the third pass: the final 1/4 of the black pixels are printed in a quartertone pattern along with all of the magenta pixels. On the fourth pass: all of the yellow pixels are printed. After the fourth pass, all the pixels of a current scan line being printed are deposited on print medium 28.

While the above-described embodiments print the black pixels in successive passes of halftone and quartertone patterns, the invention may also be practiced using other partialtone black patterns on successive passes of printheads 26 and 27. For example, each successive pass of black printhead 27 could deposit 1/3 of the black pixels in a thirdtone pattern or the first 2 passes could deposit halftone patterns with the third pass depositing no black pixels. Thus, the partial tone patterns could be any fractional tone patterns between at least zero and up to the entire pattern.

All of the disclosed examples were simulated and tested using a MOD635 4-color 48 jet per color thermal ink-jet printer equipped with a heated platen. Applicant's have found that it is preferable to use slowdry black ink and fast-dry color inks and to deposit the black ink before the color inks to keep interbleed to a minimum. From the tested examples, a process has been developed with excellent full color print quality with a dramatic reduction in black/color interbleed, along with sharp edges, and uniform black text and graphics. The invention may be used in either a uni-directional mode or a bi-directional mode.

The invention has been described with reference to the preferred embodiments thereof, which are illustrative and not limiting. Various changes may be made without departing from the spirit and scope of the invention as defined in the appended claims.

## Claims

1. A color printer for depositing black liquid ink spots and liquid ink spots having a plurality of different colors on a print medium, the printer comprising:
a liquid ink spot producing means for depositing the liquid ink spots on said medium,
traversing means for causing said liquid ink spot producing means to move in a traversal direction across said print medium in a plurality of passes for an area to be printed; and
depositing means for depositing fractions of a total number of said black ink spots and all of the ink spots of one of the plurality of different colors on separate ones of said passes.

2. The color printer according to claim 1, further comprising heating means located adjacent to said depositing means for heating said print medium to facilitate drying of said ink spots deposited on said print medium.

3. The color printer according to claim 1 or 2, wherein said heating means comprises a platen.

4. The color printer according to claim 2 or 3, wherein said heating means heats said medium at up to 150°C.

5. The color printer according to any of claims 1 to 4, wherein said depositing means comprises a black printhead and a color printhead.

6. The color printer according to claim 5, wherein the color printhead has a cyan section, a magenta section and a yellow section, each of the sections longitudinally stacked in a direction perpendicular to the traversal direction in which said liquid ink spot producing means traverses said medium.

7. The color printer according to claim 5 or 6, wherein said black printhead and said color printhead are offset in a direction perpendicular to the traversal direction.

8. The color printer according to claim 1, wherein said black ink spots are deposited in a partialtone pattern on each of said passes.

9. A method of color liquid ink printing by depositing black liquid spots and liquid ink spots having a plurality of different colors on a print medium, said method comprising the steps of:
directing signals from a controller to a liquid ink spot producing means;
causing the liquid ink spot producing means to traverse across said print medium for a plurality of passes for an area to be printed in accordance with said signals;
selectively energizing the liquid ink spot producing means in accordance with said signals to deposit fractions of a total number of said black ink spots and all of the ink spots of one of the plurality of different colors on separate ones of said passes.

10. A method of color thermal ink-jet printing, said method comprising the steps of:
heating a print medium;
causing at least one printhead to traverse in a traversal direction across the print medium for a plurality of passes for an area to be printed; and
depositing a fraction of a total number of black ink spots in a partialtone pattern and all of a total number of ink spots of one of a plurality of different colors from the at least one printhead onto the print medium on separate ones of said passes.
